(19) Europäisches Patentamt
European Patent Office
Office européen des brevets

(11) **EP 2 432 986 B1**

(12) **EUROPEAN PATENT SPECIFICATION**

(45) Date of publication and mention
of the grant of the patent:
**17.04.2019 Bulletin 2019/16**

(21) Application number: **10732463.4**

(22) Date of filing: **19.05.2010**

(51) Int Cl.:
*F03B 13/26* (2006.01)   *F03B 17/06* (2006.01)
*F03D 5/06* (2006.01)   *F03B 13/18* (2006.01)

(86) International application number:
**PCT/NL2010/050297**

(87) International publication number:
**WO 2010/134809 (25.11.2010 Gazette 2010/47)**

(54) **SYSTEM AND METHOD FOR GENERATING ENERGY FROM STREAMING WATER**

SYSTEM UND VERFAHREN ZUR ENERGIEERZEUGUNG AUS EINEM WASSERSTROM

SYSTÈME ET PROCÉDÉ DE GÉNÉRATION D'ÉNERGIE À PARTIR D'UN COURANT D'EAU

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **20.05.2009   NL 1036978
24.09.2009   NL 1037315
11.11.2009   NL 2003790**

(43) Date of publication of application:
**28.03.2012   Bulletin 2012/13**

(73) Proprietor: **Slow Mill Sustainable Power B. V.
3081 GP Rotterdam (NL)**

(72) Inventor: **Croughs, Erwin Johan
3083 ZH Rotterdam (NL)**

(74) Representative: **Luten, Martin Haaije
Arnold & Siedsma
Bezuidenhoutseweg 57
2594 AC The Hague (NL)**

(56) References cited:
**EP-A1- 0 841 480     FR-A1- 2 475 148
RU-C1- 2 037 641     US-A- 1 522 820**

**Description**

The present invention relates to a system and method for generating energy from a streaming fluid. The invention further relates to an assembly for use in such a system or method.

The world is addicted to and needs more fossil fuels every day whereas they become less available at the same rate. The world is waiting for the fossil industry to allow hard commitments for sustainable energy and keeps on waiting. The world is a free market and where expensive wind and solar plants are being built, the need for cost effective and reliable sustainable energy increases along with the awareness that climate change, industrial lobby and future energy dependence are becoming problems of a magnitude greater than anything we have confronted so far. Sustainable high-tech tidal energy converters are on the draw boards and even in use, but simple cheap high yielding slow current converters with virtual unlimited installation possibilities which will easily and economically break the backbone of industry blackmail have not yet appeared on the horizon. Present invention is going for a smart method to generate power with simple slow flow converters and tries to enhance yields by concentrating and increasing the flow that is effectively converted into usable power.

Present invention provides the means, methods, systems, ways of application and use of such a converter, as well as a discussion of workability. It is well known that river, ocean and tidal currents contain large quantities of highly reliable energy. Most effective way of harnessing the energy is by turbines in dams or in open currents. The first is limited to very specific geographic locations but the last has sheer unlimited potential. The two main types of turbines are those that run along with the current and those that run at a 90 degree angle. The first, Savonius type rotors, generate low power because the working stroke is performed in the same direction as the current, making low relative speeds and thus little energy exchange. The second, moving at an angle of 90 degrees with the flow, get the best results.

For instance; United States Patent 1,522,820 discloses a water motor including a pair of frames each composed of rotatable shafts positioned in triangular arrangement, sprocket wheels mounted adjacent the respective ends of the shafts, chains operating about the sprocket wheels and vanes operatively mounted on the chains, the frames being arranged in juxtaposed relation and the chains thereof each having one side positioned parallel with the current and along which the vanes pass when in an inactive position and the remaining portions of the chains being arranged so that the vanes will be traversed by the same part of the current and guide vanes arranged adjacent the turning point of the paths of the vanes.

The main problem of making open current underwater turbines with sufficient power is pressure leverage on the turbine blades. They either move in the same direction and results are low or they move at 90 degrees and break. The reason engineers insist on countering great ocean forces is the higher return on investment. To withstand the forces new high-tech materials and constructions are invented at high costs. The flaw in logic is of course trying to counter large amounts of concentrated energy instead of using it.

To solve above problems, a system is provided for generating energy from a streaming fluid, in particular water, having a mean streaming direction, according to claim 1, more specifically, comprising a generator and an assembly arranged to be entrained in the streaming fluid and which is moveably connected to a fixed point upstream of the assembly, wherein a generator is arranged to generate energy from movement of the assembly, parallel to and in the same direction as the mean streaming direction, against the fixed point, wherein the assembly comprises at least two interconnected blades, their surfaces extending substantially perpendicular to the mean streaming direction, wherein each of the blades preferably has a conical cross section and a second blade extends at a distance downstream and staggered in a direction perpendicular to the mean streaming direction with respect to a first blade. It is important that the assembly moves in the same direction as the main current so that unexpected great wave forces can easily be avoided by making the assembly move faster in the same direction as the current. This way the difference in velocity between water and assembly lessens and forces on chains, cable, generator and winch lessen as well. It is also important that the assembly is staggered otherwise the blades would be in each other's wake, thereby losing power to generate energy.

The present invention tries to solve the problem of countering great forces while maintaining optimum performance by a forward direction at a straight angle with the flow. The solution is found in changing the direction of the current so that no heavy leverage, no friction, no cavitations and no resistance are countered; instead they're used, generating extra power. It looks like there is hardly any velocity difference between the main current and the machine and from that effect present invention derives its name: The Slow Mill.

A system is provided wherein each conical cross section of the blades has an apex, wherein each of the normals on the apices of the blades extend substantially parallel to the mean streaming direction. The blades need to be perpendicular to the main current for maximum benefit of the Slow Mill effect caused by optimum angle of impact between flow and blade with respect to the direction of work performed by the blades. They can be flat conical shaped blades or in the form of hydrodynamic wings but the first saves a lot of construction costs.

The term conical as used herein is to be interpreted as a conic section or conic curve. The apex is a local maximum of said curve. Preferably, the blades have a substantially parabolic cross section. Highest efficiency is gained when the blades are symmetrical so that the water hits both sides of the apex equally, thereby stabilizing the assembly and transferring energy effectively.

According to a further preferred embodiment, each blade is connected to the next by connectors that are at least as long as and at most three times as long as the shortest side of the blades. If the blades are placed too close to each other the water will flow around the assembly and if they are placed too far apart the energy will be less concentrated as relatively less water will meet barriers that have to be circumvented and thus less concentrated water will be captured by the next blade.

According to a further preferred embodiment, the line through the ends of the conical cross section of a blade forms an angle between 30 degrees and 60 degrees with the tangent of the blade in the end of the conical cross section. During testing several curves were tried. A flat blade is not stable and has little resistance. A half pipe has a relative small surface exposed to the current and water flowing into a half pipe can't easily exit, thus stopping the flow. In between these we find the optimum blade performance.

According to a further preferred embodiment, connecting means between the upper part of a downstream blade and the lower part of an upstream blade, are arranged to vary the distance between said parts. A problem of the recovery stroke is that the blades are either pushed to the water surface and are difficult to reel in towards a lower point due to the resisting current flowing underneath them or when flipped the other way the current moves them directly to the bottom so that lots of friction with sand results while reeling in. To solve this, the blades get connected to each other so that they can be moved more or less in one line with the anchor point so that the assembly can be controlled to float between surface and bottom. In that position the resistance during reeling in will be substantially less.

The invention further relates to an assembly comprising at least two interconnected blades, wherein each of the blades has a conical cross section having an apex, wherein a second blade extends at a distance from the first blade in a direction of the normal on the apex of the first blade, wherein the second blade further extends staggered in a direction perpendicular to said normal and wherein each of the normals on the apices of the blades extend substantially parallel. Water flowing into the hollow side of a conical blade needs to equally easy flow out to not stop the flow behind it and allow continued impact of water to keep the assembly performing work. Above the apex the water will push the blade upwards and forward, below the apex the water will push the blade downwards and forward. The resulting vector on a symmetrical blade will be forward, while lots of energy gets transferred from the current to the blade. The main current above the blade gets concentrated by the water that is trying to circumvent the blade that acts as a barrier. Both streams are captured by the next blade which is rigged the same way but staggered above the first one to optimally capture that flow. This mechanism concentrates the energy of the main current and transfers it effectively onto the assembly.

Preferably an assembly is provided, comprising at least two interconnected blades that in operating condition extend substantially perpendicular to the main direction of the current with the second blade downstream and staggered in a direction straight at the main direction of the current in relation to the first blade. The system enhances energy transfer and obtains good stabilisation and increases the amount of current flow passing through and thus gains more energy. It looks like a multiple kite assembly but it is suspended under water and it has straight angles with the current; a kite would come down at such angles. It is based on the Slow Mill Effect: enhancing energy transfer of a current flowing straight at a barrier by creating high and a low energy potential area's in front of the barrier to deflect the flow and maintaining this to continue enhanced energy transfer. Because a current easily circumvents obstacles, especially as they move in the same direction, usually a lot of energy gets lost. To get more energy out of the current, the blades are positioned as in above assembly. The current flows over a blade, hits the next blade, transfers energy, flows down to the low potential behind the first blade, goes down further and discharges into the undercurrent beneath the assembly. To increase the energy out of the current, the blades not only convey energy onto the cable but are positioned so as to direct the overflow, which usually gets lost, onto the next blade behind and above it. The directed flow has more pressure and speed and thus more energy can be extracted by the next blade that does the same to the next one. The upstream blades create a low potential behind them where the current is deflected into. The deflection creates a flow at a 90 degree angle with the forward direction of the next blade where lots of energy can be exchanged. Behind that blade water must also travel a greater distance and a low potential is created as well, causing a greater resulting force on it and the same effect at the next blade.

If the tops of the blades lean a bit against the direction of the flow, the machine will start swaying left to right as the flow, seeking the shortest way, will dive under, left or right of the blades. If the tops of the blades fall a little in the direction of the flow, the machine will oscillate up and down as more water flows over the blades and the machine can't stay stably afloat. Both will decrease the generated power as the ideal impact gets disrupted.

The construction may look like an assembly of kites generating energy but that operates by lift and can't stay at a straight angle with the wind as downward forces of the cable and weight will pull it down. Kites produce optimum work in near vertical direction and need great distance between them to not interrupt the current, whereas the Slow Mill has its blades at close intervals to concentrate and deflect the current.

According to a preferred embodiment the assembly has a plurality of blades in which each following blade is positioned downstream, parallel and staggered in a direction straight at the main direction of the current, in relation to prior blades. Multiple blades are situated behind and above each other at such a distance that the lower ones, concentrating the energy of the current, can pass that to the blades above and behind them. The blades are staggered to collect a great surface of current flow; those downstream shouldn't be in the wake of the ones upstream and are positioned substantially above them to receive full flow. Right behind every blade a spot with low potential is created and the high energy current will flow towards it. It will pass the next higher blade in doing so with high velocity due to the concentrated energy and deflected flow caused by the potential difference. Thus the current can transfer a great amount of energy onto the higher blade. Only the first blade will have low yields but each next blade will benefit from the previous one and thus a plurality of blades gives best results.

According to a further preferred embodiment the blades are interconnected by cables, chains or ropes and to a mechanism that controls the angle of the blades with the current by varying their lengths. Like a kite the blades are pulled by the current and when their lower parts turn back, they'll rise and when their upper parts pull back, they'll come down.

According to a further preferred embodiment the blades are curved lengthwise so they have two straight sides; the line connecting them makes an angle between 30 degrees and 60 degrees with the surface that is formed when the blade is flat. In physics it is known that curved blades have greater resistance to a flow than flat blades. Because the flow on the backside travels a greater distance, lower pressure is created there.

According to a further preferred embodiment, the hollow sides of the blades face in working position upstream to deflect the current, usually downward.

According to a further preferred embodiment the distance between the blades in working position is at the most three times the shortest side of the upstream blade. The length of the chains that connect the blades needs to be at least as long as the width of the blades, and at the most three times longer but preferably two times, in order to have enough flow pass between the blades so that good energy transfer can take place. If that space is too small the current gets too much resistance and seeks a way around the assembly and yields will drop. If that space is more than three times the width of the blades, yields also drop as not enough energy gets concentrated.

According to a further preferred embodiment the blades comprise hydrodynamic wings or sails. It is known that wings perform very well, especially when they move in a different direction than the current.

According to a further preferred embodiment, the assembly comprises a floating body. In use, the assembly is held at least partly in suspension in the medium, whether it is flowing or not, by a body that is lighter than water and heavier than air that is only connected to the assembly. When there is good current and the blades are a little slanted the assembly can be held in place by lift but when the blades are at a straight angle with the current, they won't have lift and tend to sink. Also, when there is no current, lift is impossible. So there should always be another force to get the assembly suspended in the medium and that is provided by a floating body connected to the assembly or blades at least partly lighter than water. If it can only take part of the assembly up into the medium, flow can lift the rest.

According to a further preferred embodiment the blades can be varied; a working condition wherein they are extended substantially at a 90 degree angle with the main flow direction and a returning position wherein they extend substantially in the direction of the anchor point. To get most resistance during the work stroke, maximum surface is exposed to the current but to return to the starting position a minimum of resistance is required and the blades are flipped in the direction of the anchor so that the current actively pushes them down.

According to a further preferred embodiment the generator converts mechanic energy from the assembly into a fluid under pressure. A pump can pressurise a medium and transport the energy to a point where it can be processed. It doesn't need a lot of maintenance or repair and is cheaper than a generator on the bottom of the sea. There will be transport losses but a power plant on land has many advantages for construction, personnel, repair, life years, etc.

According to a further preferred embodiment the generator is connected to a winch at the anchor point. To facilitate the connection to the shore or grid, the generator is placed on the seabed.

According to a further preferred embodiment the generator is connected to a winch at the assembly. To avoid installing expensive generators on the ocean floor, the generator is attached to the assembly and is easy to replace.

According to a further preferred embodiment the generator determines the speed and direction between assembly and anchor point by directing more or less energy to or from a point where energy is processed. To generate power the assembly needs to move along the current and roll off the winch that is resisted by a generator or pump. For each speed of current there is an optimum speed at which the assembly generates optimum power. A computer calculates how much resistance is needed and adjusts the amount of resistance. Resistance is higher when more power is depleted. So speed and power generation can be maintained at an optimum ratio. At the end of the work stroke the computer turns the blades in the current what turns off the pressure and the generator becomes a motor that reels in the assembly at resistance.

According to a further preferred embodiment at least part of the assembly has a ratio of mass to volume that is lower than that of water. The system can be held in place by several means. A separate body may not be optimum because of the drag during the recovery stroke. Air is a good medium to fill up hydrofoils and a partly floating construction can easily be made and the system will always be operable and no energy is wasted on lifting. Risks of coming down are small, can easily be countered and don't have grave effects. The assembly should stay suspended so it can move along with changing currents but it can't float too much as recovery will cost more energy.

The invention furthermore relates to a method for generating energy from a streaming fluid, in particular water, having a mean streaming direction, from movement between a fixed point and an assembly arranged to be entrained in the same direction as and parallel to the mean streaming direction from a starting location to a returning location, wherein the assembly comprises at least two interconnected blades, preferably having conical cross sections, wherein a second blade extends downstream with respect to a first blade, wherein the blades are movable between a working position and a returning position, wherein in the working position the blade surfaces extend substantially perpendicular to the mean streaming direction, the second blade extending staggered in a direction perpendicular to the mean streaming direction with respect to the first blade, wherein in the returning position the blades extend substantially in a plane through the fixed point, the method comprising the steps of:

- moving the blades to the working position at the starting location;
- entraining the assembly, moving the blades in the direction of and parallel to the mean streaming direction, thereby generating energy from that movement against the fixed point;
- moving the blades to the returning position at the returning location, and;
- returning the assembly to the starting position.

This method of generating energy from currents and waves is highly effective compared to contemporary converters because it reduces the biggest problem they have to an absolute minimum. The biggest problems with ocean energy are the huge forces that smash constructions to smithereens and the high friction, limiting their size. Because present invention is arranged to move in the same direction as the great forces, it doesn't need to hold up against them thereby eliminating the great force problems. Also the problem of friction is brought down to an absolute minimum. During the work stroke there is almost no friction due to aligned movement of water and assembly. During the recovery stroke there is some friction but it is brought down to a minimum by flipping the blades nearly parallel to the flow direction. As brakes are not necessary, there will not be great stresses on the cable nor assembly. The parts and amounts of steel used are brought down to a minimum as the construction does not need to withstand extreme wave forces nor high friction. A Slow Mill of 6 MW can be transported in 2 sea containers. Of all other kinds of sustainable energy, probably only waterfalls with natural high lakes to replace reservoirs will need less installed weight per kilowatt.

To perform work the assembly is moved by the current and a cable connected to the anchor point is reeled off. When the cable is pulled out at the end of the work stroke, the assembly needs to be reset and that is done by flipping the blades in the direction of the current so that resistance is minimum and then applying power to the generator or pump that becomes a motor and reels in the cable so that the device returns to its starting point and repeats the work stroke. To adjust the position of the blades, a device connected to a movement sensor and control unit, shortens and lengthens the monitor chains a bit to maintain optimum angles across the current to stabilize and optimize operation. To recover the assembly to its starting position the device can lengthen the lower chains, aligning the blades in the direction of the current, losing resistance and the chain is pulled in, partly by current pressure, to its starting point where the blades are set straight across the current and the work cycle starts again.

According to a further preferred embodiment the assembly is kept substantially parallel to the main direction of the current by a floating body so net effective work is generated substantially parallel to and in direction of the main direction of the current. Of course it will fluctuate a bit up and down but no net work will come from the oscillation. Kites that have similar features and workability in air cannot perform work in horizontal direction as that requires an angle of 90 degree of the kite with the main direction of the wind and they will come down. Also performance will drop when moving in the same direction as the wind. Only when held up by a pole and put close to each other according to present invention will they keep performing well in horizontal direction.

According to a further preferred embodiment the length of at least two cables, connected to the anchor point and at the other side to the tops of the blades, can be varied against the length of at least two other cables, connected to the anchor point and at the other side to the bottoms of the blades; thus the angle the blades make with the current can be varied.

According to a further preferred embodiment a sensor measures the angle of the blades and is connected to a mechanism that uses the information to adjust the blades to a 90 degree angle with the main direction of the current. The best performance is gotten from a 90 degree angle and it needs adjustment as the angle with the anchor point is not always the same.

According to a further preferred embodiment a computer executes the recovery stroke at least twice as fast as the work stroke. To increase the amount of power generated by the working surface of the blades per time unit, the period of work must be longer than the recovery period. The better the work/recovery ratio, the higher the yields, preferably 4:1.

According to a further preferred embodiment sensors that measure waves are connected to a computer that monitors the optimum position of the blades for generating work during the wave; the sensors measure a wave trough, give that information to the computer that executes the recovery stroke, i.e. returning the assembly, in the wave trough; repetition of the cycle. Waves have lots of energy and many wave converters are engineered but only the bobbing buoy performs somewhat as most other devices break in storms. They have the same problem as all resistance devices that are circumvented by currents so that only small parts of the energy contained in the waves can be harnessed. State of the art wave devices are constructed to generate energy out of the surface waves but said assembly also uses wave energy contained 10 or 20 meters underneath, which is much more than the surface energy. It has the full wave flow through and can endure storms suspended under the rough surface. A computer lets the work stroke roll along the wave and the recovery stroke in the wave trough that already has a tendency to flow back and thus less energy is consumed during recovery. Sensors that are connected to the computer provide data as to the optimum timing of work and recovery strokes.

A propeller or jet has at least part of the assembly floating in said medium. If the assembly is too heavy and sinks to the seabed, a mechanical force can lift it up into the medium. The current can then push it further into working position.

The present invention is further illustrated by the following Figures, which show a preferred embodiment of the device according to the invention, and are not intended to limit the scope of the invention in any way, wherein:

- Fig. 1 schematically shows the system according to the invention in both the working as the returning position;

- Fig. 2 schematically shows the system and method of the assembly concentrating and transferring energy from currents;

- Fig. 3 schematically shows the relationship between the blades of the assembly and how they overlap;

- Fig. 4 schematically shows the relative distances of the blades.

- Fig. 5 schematically shows the curvature of the surface of a blade.

- Fig. 6 shows the graph results of the tests at TU Delft.

- Fig. 7. schematically shows a way of interconnecting the blades according to the invention, and;

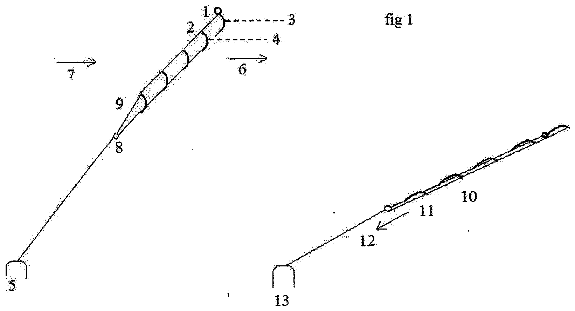

In figure 1, blades (1,2) are parallel and staggered, their normals (3,4) are also parallel and staggered. The assembly is connected to anchor point (5) and moves (6) in the same direction as the main current (7). Mechanism (8) varies the relative length of cables (9) and the blades (10, 11) turn into the direction of the anchor point (13) and move (12) towards it.

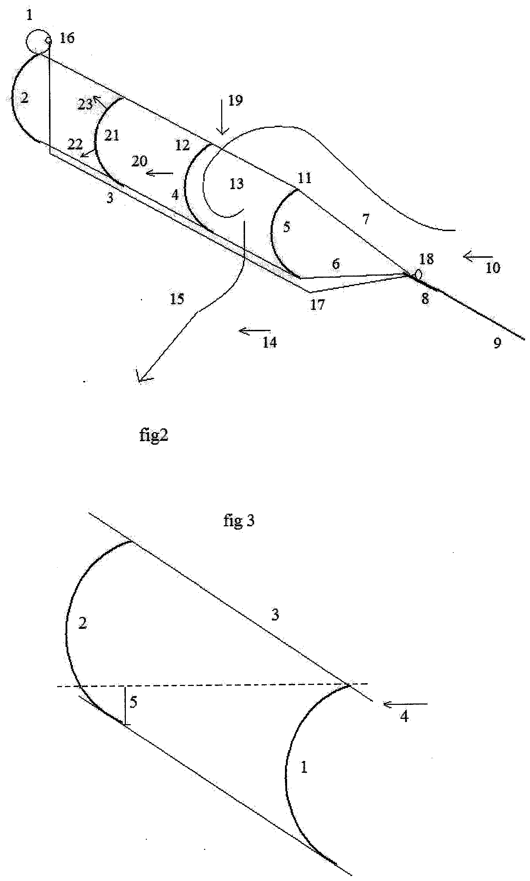

In figure 2, on a floating body (1) hang blades (2,3,4,5) which are connected through monitor chains (6,7) to monitor frame (8) which is connected to the seabed by cable (9). The current (10) flows straight at blade (5) which resists it and diverts the flow partly over its top (11) thus concentrating the energy of it, to be captured at blade (4). Behind blade (5) is an area of low potential (13) as no straight flow can get there; the water travels a greater distance. The current (14) that flows under the machine sucks (15) the energy starved flow into its stream. On the floater (1) is a movement measuring device (16) which is connected by cable (17) to a control unit (18) on monitor frame (8). When it measures too much movement up and down the control unit pulls monitor chain (7) and when it measures too much swaying left and right, the control unit pulls monitor chain (6) to stabilize the machine. At the end of a working stroke the control unit slackens chain (6) so that the blades follow the direction of current flow (10), losing their resistance so that cable (9) can pull the machine back to its starting position. At the top (12) of blade (4) the current comes partly in vertical (19) direction onto the blade. A lot of energy is exchanged because the direction of the blade makes an optimum angle with the deflected flow. The part of the surface above the apex (21) of a blade will be pushed up and forwards (23), the part below the apex gets pushed down and forwards (22). The resulting vector (20) is responsible for the work of the assembly in horizontal direction after maximum energy is transferred.

As shown in figure 3, blades (1,2) are connected by cables (3). Blade (2) is behind, parallel and staggered with regards to blade (1), overlapping it 25% (5) in the mean streaming direction (4).

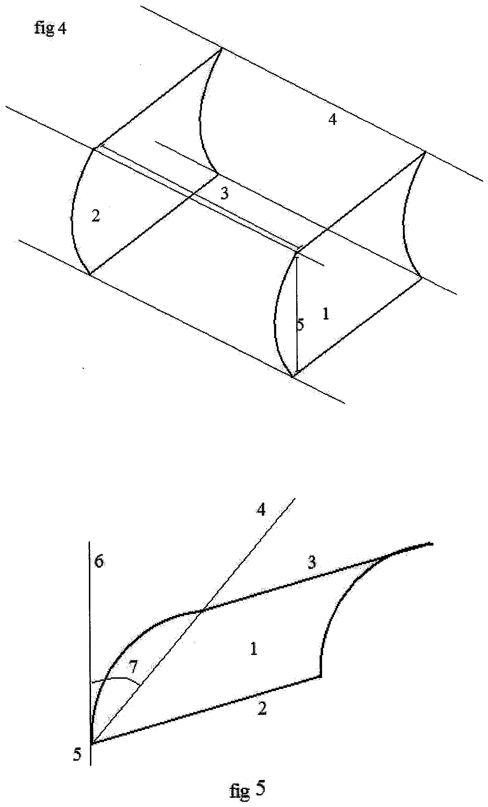

As shown in figure 4, blades (1,2) are connected by cables (4) least as long (3) as the smallest side (5) of a blade (1) and maximally three times as long.

As shown in figure 5, blade (1) has a conical cross section and the line (4) that connects their ends (2,3) crosses the tangent (6) in an end of the cross section (5) at an angle of at least 30 degrees (7) and at most 60 degrees. Optimum angle at 45 degrees.

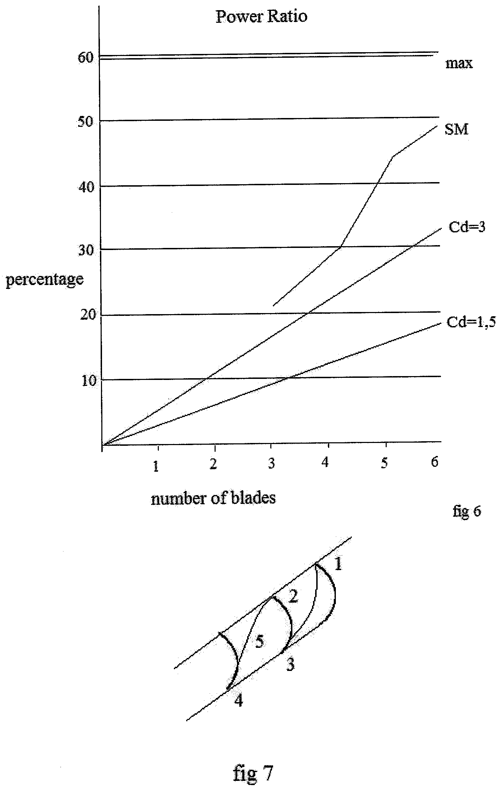

Shown in figure 6 is the graph of the tests results in TU Delft, the generated power of the Slow Mill doesn't move linear when more blades are placed in the same current area and it exceeds expected results of a single body in a current.

As shown in figure 7, upper parts (1,2) of upper blades are connected to lower parts (3,4) of lower blades by connecting means (5) that can vary the distance between said parts.

In September 2009 an experiment was conducted at the Fluid Mechanics Laboratory of the Delft University of Technology. A small test model of the Slow Mill with 5 blades of 8cm x 40cm was hooked onto a movable Newton meter and put in a laboratory testing current of 20cm/s. Normally a body in a stream has a resistance coefficient Cd of around 1.5 and generates an optimum of about 20% of the available energy in the current.

An object in a water current experiences a force Fd that can be defined by $Fd = 1/2\ Þ\ ACdVr^2$
Where:

Þ= water density = $1000kg/m^3$;
A= flow surface;
Vr=Vw-Vv = relative speed of the object Vv with regard to the waterspeed Vw;
Cd = resistance coefficient of the object;

The power that can be generated by the object is:

$$Pv = FdVv\ \ = 1/2\ þ\ ACd\ \ Vr^2Vv\ \ = 1/2\ þ\ ACd\ (Vw-Vv)^2Vv$$

The power that is available in the water is:

$$Pw = 1/2\ þ\ AVw^3$$

Efficiency of the object is:

$$Pv/Pw\ \ = Cd\ Vv/Vw$$

The theoretical absolute maximum efficiency is reached at:

$$Vv\ \ \ = 1/3Vw$$

Thus the theoretical maximum efficiency of the object is: 1/3Cd.

This is practically unobtainable and still pretty low because the body and current have the same direction, making low relative speeds and on top of that a great deal of the current circumvents the body. But the model generated during the work stroke about 48% of the available energy. The power was more than expected, see figure 6 under SM, and even more than high-tech windmills, which do about 44%. The theoretical maximum that can be generated from currents, the Betz Limit, is 59,3%. It did not need to be very refined because friction and leverage that windmills compensate, costing efficiency, were captured by the cable and Newton meter, adding to the generated work. The optimum speed at which a single body generates most energy is 1/3rd of the water velocity but the Slow Mill performed optimum at 3/5th of the water velocity, proving it not to act like a single body.

So the Slow Mill cannot be seen as a single body resisting a current. The only known way to reach the high results is at high relative speeds between current and blades and is optimum at an angle of about 90 degrees. Because the blades are situated behind and above each other, the direction of flow is changed and hits the blades in vertical direction. The vertical speed of the blades is zero and high relative speeds are created. Above change of direction and impact was plainly visible in a coloured water flow used for visualisation of currents. The number of blades influenced the generated amount of work. When more blades are put in the same flow surface, the power per blade increases significantly, proving the leverage they have on each other. The blades performed best perpendicular to the main direction of the current, proving that the current got deflected. The same assembly performed significantly less when gaps between blades were closed partly, proving that a good flow between blades is needed for high efficiency. Above thesis also got proved by photo and video material of coloured water streams rolling through the blades.

The present invention is not limited to the embodiment shown, but extends also to other embodiments falling within the scope of the appended claims.

**Claims**

1. Assembly (1) for use in a system for generating energy in streaming water having a mean streaming direction (10), comprising at least two interconnected blades (2,3,4,5), wherein each of the blades (2,3,4,5) has a conical cross section having an apex, wherein a second blade extends at a distance from a first blade in a direction of the normal on the apex of the first blade, wherein the second blade further extends staggered in a direction perpendicular to said normal and wherein each of the normals on the apices of the blades extend substantially parallel to the mean streaming direction, when in use and in a working position, wherein the assembly further comprises a propeller, buoyant body or jet arranged for making at least part of said assembly (1) float.

2. System for generating energy in streaming water having a mean streaming direction (10), comprising a generator and an assembly (1) of claim 1 prearranged to be entrained in the streaming water and which is moveably connected to a fixed point upstream of the assembly (1), wherein a generator is arranged to generate energy from movement of the assembly (1), parallel to and in the same direction as the mean streaming direction (10), against the fixed point, wherein the surfaces of the at least two interconnected blades (2,3,4,5) of the assembly, when in use and in a working position, extend substantially perpendicular to the mean streaming direction (10), wherein a second blade extends at a distance downstream and staggered in a direction perpendicular to the mean streaming direction (10) with respect to a first blade when in use and in a working position, wherein each of the blades (2,3,4,5) has a conical cross section, and wherein each conical cross section of the blades has an apex, wherein each of the normals (3,4) on the apices of the blades extend substantially parallel to the mean streaming direction, when in use and in a working position.

3. System according to claim 2, wherein the blades (2,3,4,5) have a substantially parabolic cross section.

4. System according to one or more foregoing claims 2 - 3, wherein each following blade (2,3,4,5) overlaps the previous one not more than 25% in the mean streaming direction (10), when in use and in a working position.

5. System according to one or more foregoing claims 2 - 4, wherein each blade (2,3,4,5) is connected to the next by connectors that are at least as long as and at most three times as long as the shortest side of the blades (2,3,4,5).

6. System according to one or more foregoing claims 2 - 5, wherein the line through the ends of the conical cross section of a blade forms an angle between 30 degrees and 60 degrees with the tangent of the blade in an end of the conical cross section.

7. System according to one or more foregoing claims 2 - 6, wherein connecting means between the upper part of a downstream blade and the lower part of an upstream blade, are arranged to vary the distance between said parts.

8. Method for generating energy in streaming water having a mean streaming direction (10), from movement between a fixed point and an assembly (1) arranged to be entrained in the same direction as and parallel to the mean streaming direction (10), wherein the assembly (1) comprises at least two interconnected blades (2,3,4,5) having conical cross sections, wherein a second blade extends downstream with respect to a first blade, wherein in a working position the blade surfaces extend substantially perpendicular to the mean streaming direction (10), wherein each conical cross section of the blades has an apex, wherein each of the normals (3,4) on the apices of the blades extend substantially parallel to the mean streaming direction, when in use and in a working position, the second blade extending staggered in a direction perpendicular to the mean streaming direction (10) with respect to the first blade, wherein the assembly further comprises a propeller, buoyant body or jet arranged for making at least part of said assembly (1) float, the method comprising entraining the assembly (1), moving the blades (2,3,4,5) in the direction of and parallel to the mean streaming direction (10), thereby generating energy from that movement against the fixed point.

9. Method for generating energy according to claim 8, wherein the assembly is arranged to be entrained from a starting location to a returning location, wherein the blades are movable between the working position and a returning position, wherein in the returning position the blades (2,3,4,5) extend substantially in a plane through the fixed point, wherein the method further comprises the steps of:

- moving the blades (2,3,4,5) to the working position at the starting location;
- entraining the assembly;
- moving the blades (2,3,4,5) to the returning position at the returning location, and;
- returning the assembly (1) to the starting position.

**10.** Method for generating energy according to claim 8 or 9, wherein a control mechanism executes the return movement at least twice as fast as the working stroke, wherein the working stroke consists in moving the blades from the starting location to the returning location..

**11.** Method for generating energy according to claim 8, 9 or 10, wherein sensors measure waves and give that data to a computer that places the blades (2,3,4,5) in optimum position to harness the waves; the sensors measuring the wave retreat and give that data to the computer that executes the return movement.

## Patentansprüche

**1.** Anordnung (1) zur Verwendung in einem System zur Energieerzeugung in strömendem Wasser mit einer mittleren Strömungsrichtung (10), die wenigstens zwei miteinander verbundene Schaufeln (2, 3, 4, 5) aufweist, wobei jede der Schaufeln (2, 3, 4, 5) einen konischen Querschnitt mit einer Spitze hat, wobei eine zweite Schaufel sich in einem Abstand von einer ersten Schaufel in eine Richtung der Normalen auf die Spitze der ersten Schaufel erstreckt, wobei die zweite Schaufel sich ferner versetzt in eine Richtung senkrecht zu der Normalen erstreckt, und wobei jede der Normalen auf die Spitzen der Schaufeln sich, sofern im Gebrauch und in einer Arbeitsposition, im Wesentlichen parallel zu der mittleren Strömungsrichtung erstreckt, wobei die Anordnung ferner einen Propeller, einen Auftriebskörper oder eine Strahldüse aufweist, um wenigstens einen Teil der Anordnung (1) schwimmen zu lassen.

**2.** System zur Energieerzeugung in strömendem Wasser mit einer mittleren Strömungsrichtung (10), das einen Generator und eine Anordnung (1) nach Anspruch 1 aufweist, das derart eingerichtet ist, dass es in dem strömendem Wasser mitgerissen wird, und das mit einem festen Punkt strömungsaufwärtig der Anordnung (1) beweglich verbunden ist, wobei ein Generator, um Energie aus der Bewegung der Anordnung (1) gegen den festen Punkt zu erzeugen, parallel zu und in der gleichen Richtung wie die mittlere Strömungsrichtung (10) eingerichtet ist, wobei die Oberflächen der wenigstens zwei miteinander verbundenen Schaufeln (2, 3, 4, 5) der Anordnung sich, sofern im Gebrauch und in einer Arbeitsposition, im Wesentlichen senkrecht zu der Hauptströmungsrichtung (10) erstrecken, wobei sich eine zweite Schaufel, sofern im Gebrauch und in einer Arbeitsposition, in einem Abstand strömungsabwärtig und in einer Richtung senkrecht zu der Hauptströmungsrichtung (10) in Bezug auf eine erste Schaufel versetzt erstreckt, wobei jede der Schaufeln (2, 3, 4, 5) einen konischen Querschnitt hat, und wobei jeder konische Querschnitt der Schaufeln eine Spitze hat, wobei jede der Normalen (3, 4) auf die Spitzen der Schaufeln sich, sofern im Gebrauch und in einer Arbeitsposition, im Wesentlichen parallel zu der mittleren Strömungsrichtung erstreckt.

**3.** System nach Anspruch 2, wobei die Schaufeln (2, 3, 4, 5) einen im Wesentlichen parabelförmigen Querschnitt haben.

**4.** System nach einem oder mehreren vorhergehenden Ansprüchen 2 - 3, wobei jede folgende Schaufel (2, 3, 4, 5), wenn sie im Gebrauch und in einer Arbeitsposition ist, die Vorhergehende um nicht mehr als 25% in der mittleren Strömungsrichtung (10) überlappt.

**5.** System nach einem oder mehreren vorhergehenden Ansprüchen 2 - 4, wobei jede Schaufel (2, 3, 4, 5) durch Verbinder, die wenigstens so lang und höchstens dreimal so lang wie die kürzeste Seite der Schaufeln (2, 3, 4, 5) sind, mit der Nächsten verbunden ist.

**6.** System nach einem oder mehreren der vorhergehenden Ansprüche 2 - 5, wobei die Linie durch die Enden des konischen Querschnitts einer Schaufel einen Winkel zwischen 30 Grad und 60 Grad mit der Tangente in einem Ende des konischen Querschnitts bildet.

**7.** System nach einem oder mehreren vorhergehenden Ansprüchen 2 - 6, wobei Verbindungsmittel zwischen dem oberen Teil einer strömungsabwärtigen Schaufel und dem unteren Teil einer strömungsaufwärtigen Schaufel eingerichtet sind, um den Abstand zwischen diesen Teilen zu ändern.

**8.** Verfahren zur Energieerzeugung in strömendem Wasser mit einer mittleren Strömungsrichtung (10) aus der Bewegung zwischen einem festen Punkt und einer Anordnung (1), die eingerichtet ist, um in der gleichen Richtung wie und parallel zu der mittleren Strömungsrichtung (10) mitgerissen zu werden, wobei die Anordnung (1) wenigstens zwei miteinander verbundene Schaufeln (2, 3, 4, 5) mit konischen Querschnitten aufweist, wobei eine zweite Schaufel sich in Bezug auf eine erste Schaufel strömungsabwärts erstreckt, wobei die Schaufeloberflächen sich in einer Arbeitsposition im Wesentlichen senkrecht zu der mittleren Strömungsrichtung erstrecken, wobei jeder konische Querschnitt eine Spitze hat, wobei jede der Normalen (3, 4) auf die Spitzen der Schaufeln sich, sofern im Gebrauch und in einer Arbeitsposition, im Wesentlichen parallel zu der mittleren Strömungsrichtung (10) erstreckt, wobei die zweite Schaufel sich in einer Richtung senkrecht zu der mittleren Strömungsrichtung (10) in Bezug auf die erste Schaufel versetzt erstreckt, wobei die die Anordnung ferner einen Propeller, einen Auftriebskörper oder eine Strahldüse aufweist, die eingerichtet sind, um wenigstens einen Teil der Anordnung (1) schwimmen zu lassen, wobei das Verfahren das Mitreißen der Anordnung (1), Bewegen der Schaufeln (2, 3, 4, 5) in der Richtung von und parallel zu der mittleren Strömungsrichtung (10) aufweist, wodurch Energie aus dieser Bewegung gegen den festen Punkt erzeugt wird.

9. Verfahren zur Energieerzeugung nach Anspruch 8, wobei die Anordnung eingerichtet ist, um von einem Startort zu einem Umkehrort mitgerissen zu werden, wobei die Schaufeln zwischen der Arbeitsposition und der Umkehrposition beweglich sind, wobei die Schaufeln (2, 3, 4, 5) sich in der Umkehrposition im Wesentlichen in einer Ebene durch den festen Punkt erstrecken, wobei das Verfahren ferner die folgenden Schritte aufweist:

 - Bewegen der Schaufeln (2, 3, 4, 5) zu der Arbeitsposition an dem Startort;
 - Mitreißen der Anordnung;
 - Bewegen der Schaufeln (2, 3, 4, 5) zu der Umkehrposition an dem Umkehrort; und
 - Rückführen der Anordnung (1) in die Startposition.

10. Verfahren zur Energieerzeugung nach Anspruch 8 oder 9, wobei ein Steuermechanismus die Rückkehrbewegung wenigstens zweimal so schnell wie den Arbeitshub durchführt, wobei der Arbeitshub aus der Bewegung der Schaufeln von dem Startort zu dem Umkehrort besteht.

11. Verfahren zur Energieerzeugung nach Anspruch 8, 9 oder 10, wobei Sensoren Wellen messen und diese Daten an einen Computer weitergeben, der die Schaufeln (2, 3, 4, 5) in die optimale Position versetzt, um die Wellen auszunutzen; wobei die Sensoren den Wellenrückzug messen und diese Daten an den Computer weitergeben, der die Rückführungsbewegung ausführt.

**Revendications**

1. Ensemble (1) pour une utilisation dans un système pour la génération d'énergie dans de l'eau en écoulement présentant une direction moyenne d'écoulement (10), comprenant au moins deux aubes interconnectées (2, 3, 4, 5), dans lequel chacune des aubes (2, 3, 4, 5) présente une section transversale conique présentant un sommet, dans lequel une seconde aube s'étend à une distance d'une première aube dans une direction de la perpendiculaire sur le sommet de la première aube, dans lequel la seconde aube s'étend en outre en décalage dans une direction perpendiculaire à ladite perpendiculaire et dans lequel chacune des perpendiculaires sur les sommets des aubes s'étend sensiblement parallèlement à la direction moyenne d'écoulement, en utilisation et dans une position de travail, dans lequel l'ensemble comprend en outre un propulseur, un corps flottant ou un jet agencé pour constituer au moins une partie dudit flotteur d'ensemble (1).

2. Système pour la génération d'énergie dans de l'eau en écoulement présentant une direction moyenne d'écoulement (10), comprenant un générateur et un ensemble (1) selon la revendication 1 agencé pour être entraîné dans l'eau en écoulement et qui est raccordé de manière mobile à un point fixe en amont de l'ensemble (1), dans lequel un générateur est agencé pour générer de l'énergie à partir du mouvement de l'ensemble (1), parallèlement à et dans la même direction que la direction moyenne d'écoulement (10), contre le point fixe, dans lequel les surfaces des au moins deux aubes interconnectées (2, 3, 4, 5) de l'ensemble, en utilisation et dans une position de travail, s'étendent sensiblement perpendiculairement à la direction moyenne d'écoulement (10), dans lequel une seconde aube s'étend à une distance en aval et en décalage dans une direction perpendiculaire à la direction moyenne d'écoulement (10) par rapport à une première aube en utilisation et dans une position de travail, dans lequel chacune des aubes (2, 3, 4, 5) présente une section transversale conique, et dans lequel chaque section transversale conique des aubes présente un sommet, dans lequel chacune des perpendiculaires (3, 4) sur les sommets des aubes s'étend sensiblement parallèlement à la direction moyenne d'écoulement, en utilisation et dans une position de travail.

**3.** Système selon la revendication 2, dans lequel les aubes (2, 3, 4, 5) présentent une section transversale sensiblement parabolique.

**4.** Système selon l'une ou plusieurs des revendications précédentes 2 à 3, dans lequel chaque aube suivante (2, 3, 4, 5) chevauche la précédente à pas plus de 25 % dans la direction moyenne d'écoulement (10) en utilisation et dans une position de travail.

**5.** Système selon l'une ou plusieurs des revendications précédentes 2 à 4, dans lequel chaque aube (2, 3, 4, 5) est raccordée à la suivante par des connecteurs qui sont au moins aussi longs que et au plus trois fois plus longs que le côté le plus court des aubes (2, 3, 4, 5).

**6.** Système selon l'une ou plusieurs des revendications précédentes 2 à 5, dans lequel la ligne au travers des extrémités de la section transversale conique d'une aube forme un angle entre 30 degrés et 60 degrés avec la tangente de l'aube dans une extrémité de la section transversale conique.

**7.** Système selon l'une ou plusieurs des revendications précédentes 2 à 6, dans lequel des moyens de raccordement entre la partie supérieure d'une aube en aval et la partie inférieure d'une aube en amont sont agencés pour varier la distance entre lesdites parties.

**8.** Procédé pour la génération d'énergie dans de l'eau en écoulement présentant une direction moyenne d'écoulement (10), à partir du mouvement entre un point fixe et un ensemble (1) agencé pour être entraîné dans la même direction que et parallèlement à la direction moyenne d'écoulement (10), dans lequel l'ensemble (1) comprend au moins deux aubes interconnectées (2, 3, 4, 5) présentant des sections transversales coniques, dans lequel une seconde aube s'étend en aval par rapport à une première aube, dans lequel dans une position de travail les surfaces d'aubes s'étendent sensiblement perpendiculairement à la direction moyenne d'écoulement (10), dans lequel chaque section transversale conique des aubes présente un sommet, dans lequel chacune des perpendiculaires (3, 4) sur les sommets des aubes s'étend sensiblement parallèlement à la direction moyenne d'écoulement, en utilisation et dans une position de travail, la seconde aube s'étendant en décalage dans une direction perpendiculaire à la direction moyenne d'écoulement (10) par rapport à la première aube, dans lequel l'ensemble comprend en outre un propulseur, un corps flottant ou un jet agencé pour constituer au moins une partie dudit flotteur d'ensemble (1), le procédé comprenant l'entraînement de l'ensemble (1), le déplacement des aubes (2, 3, 4, 5) dans la direction de et parallèlement à la direction moyenne d'écoulement (10), la génération ainsi d'énergie à partir de ce mouvement contre le point fixe.

**9.** Procédé de génération d'énergie selon la revendication 8, dans lequel l'ensemble est agencé pour être entraîné d'un emplacement de départ à un emplacement de retour, dans lequel les aubes sont mobiles entre la position de travail et une position de retour, dans lequel dans la position de retour les aubes (2, 3, 4, 5) s'étendent sensiblement dans un plan au travers du point fixe, dans lequel le procédé comprend en outre les étapes suivantes :

- le déplacement des aubes (2, 3, 4, 5) à la position de travail à l'emplacement de départ ;
- l'entraînement de l'ensemble ;
- le déplacement des aubes (2, 3, 4, 5) à la position de retour à l'emplacement de retour, et ;
- le retour de l'ensemble (1) à la position de départ.

**10.** Procédé de génération d'énergie selon la revendication 8 ou 9, dans lequel un mécanisme de commande exécute le mouvement de retour au moins deux fois plus vite que la course de travail, dans lequel la course de travail consiste à déplacer les aubes de l'emplacement de départ à l'emplacement de retour.

**11.** Procédé de génération d'énergie selon la revendication 8, 9 ou 10, dans lequel des capteurs mesurent des ondes et fournissent ces données à un ordinateur qui place les aubes (2, 3, 4, 5) en position optimale pour exploiter les ondes ; les capteurs mesurant le retrait d'onde et fournissant ces données à l'ordinateur qui exécute le mouvement de retour.

fig 1

fig2

fig 3

fig 4

fig 5

Power Ratio

60 — max

50 — SM

40

percentage 30 — Cd=3

20 — Cd=1,5

10

1  2  3  4  5  6

number of blades

fig 6

fig 7

## REFERENCES CITED IN THE DESCRIPTION

**Patent documents cited in the description**

- US 1522820 A